# NEUE EUROPÄISCHE PATENTSCHRIFT

(11) **EP 0 976 636 B2**
(45) Veröffentlichungstag und Bekanntmachung des Hinweises auf die Entscheidung über den Einspruch: **15.07.2009**
(45) Hinweis auf die Patenterteilung: 29.12.2004
(21) Anmeldenummer: 99115015.2
(22) Anmeldetag: 30.07.1999
(51) Int. Cl.: B60T 17/00, B60T 17/02, B60T 11/32

(54) **Druckluftversorgungseinrichtung für Fahrzeug-Druckluftanlagen**
Compressed air supply device for vehicle compressed air systems
Installation d'alimentation en air comprimé pour systèmes à air comprimé de véhicules

(30) Priorität: 31.07.1998 DE 19834701
(43) Veröffentlichungstag der Anmeldung: 02.02.2000
(73) Patentinhaber: KNORR-BREMSE SYSTEME FÜR NUTZFAHRZEUGE GMBH, 80809 München (DE)
(72) Erfinder: Hilberer, Eduard, 68766 Hockenheim (DE)

(56) Entgegenhaltungen:
- DE-A- 3 514 989
- DE-A- 19 515 895
- DE-C- 19 710 814
- DE-C1- 19 710 814

## Beschreibung

Die Erfindung betrifft eine Druckluftversorgungseinrichtung für Fahrzeug-Druckluftanlagen gemäß des Oberbegriffs des Patentanspruchs 1.

Derartige Druckluftversorgungseinrichtungen für Fahrzeug-Druckluftanlagen weisen üblicherweise einen Lufttrockner auf, der die von einem Kompressor geförderte Druckluft trocknet und regeneriert und ggf. Hilfseinrichtungen aufweist und ferner ein diesem pneumatisch nachgeschalteten Mehrkreisschutzventil.

Eine gattungsgemäße Druckluftversorgungseinrichtung für Fahrzeug-Druckluftanlagen ist aus der DE 35 14 989 A1 bekannt. Eine derartige Druckluftversorgungseinrichtung weist ein gemeinsames, ggf. mehrteiliges Gehäuse auf, das zu einer Baueinheit zusammengefaßt ist. Schon durch die gattungsgemäße Druckluftversorgungseinrichtung ist eine einfache und in gewissem Rahmen Verbindungsrohrleitungen sparende Montage der Druckluftversorgungseinrichtung im Fahrzeug möglich.

Bei dieser Einrichtung ist das Vierkreisschutzventil mit einem Flansch an den Lufttrockner angeschraubt, über den die Vierkreisschutzeinheit mit Luft aus dem Lufttrockner versorgt wird. Bei derartigen Anlagen werden die Versorgungsdrücke der Bremsanlagen über eine separate Druckluftleitung ins Führerhaus geführt und dort mit einem Manometer dem Fahrer angezeigt.

Die DE 195 15 895 A1 offenbart eine Druckluft-Versorgungseinrichtung für Fahrzeug-Druckluftanlagen sowie ein Verfahren zum Steuern der Druckluft-Versorgungseinrichtung. Hierbei ist ein Luftkompressor vorgesehen, von dessen Ausgang zur Versorgung der Druckluftanlage eine Förderleitung zu einem Lufttrockner führt. Die Förderleitung ist ausgangsseitig des Lufttrockners in zu wenigstens zwei Verbraucherkreisen führende Leitungszweige verzweigt. Der Druck in den Verbraucherkreisen ist durch Drucksensoren überwachbar. Es ist außerdem eine Steuerelektronik vorgesehen, an die die Drucksensoren angeschlossen sind. Die Verbraucherkreise sind durch ein von der programmierbaren Steuerelektronik schaltbares, im jeweiligen Förderleitungszweig liegendes Sperrglied von der Druckluftversorgung abtrennbar. Hierdurch ist die Zufuhr von Druckluft in die Verbraucherkreise und die Entnahme von Druckluft zur Überleitung von einem Kreis in den anderen von der Steuerelektronik steuerbar.

Die Drucksensoren und das Mehrkreisschutzventil als auch die Steuerelektronik sind gemäß der Ausführungsbeispiele in einem gemeinsamen Gehäuse vorgesehen. zwischen dem Luftkompressor und den Druckluftvorratsbehältern sich befindende Elemente der Druckluftversorgungseinrichtung können in eine Geräteeinheit zusammengefaßt sein.

Aufgabe der vorliegenden Erfindung ist es, zusätzliche Verbindungsrohrleitungen und zu verbauendes Material einzusparen, um eine kostengünstige und sichere Druckanzeige zu ermöglichen, wobei insbesondere die Komponenten der Druckluftversorgungseinrichtung auch unter starker Beanspruchung noch funktionsfähig gehalten werden. Es ist eine weitere Aufgabe der vorliegenden Erfindung, eine Druckluftversorgungseinrichtung anzugeben, wobei deren Montage schnell und zuverlässig möglich ist, wobei insbesondere schneller verschleißende Teile einfach austauschbar sind.

Gelöst werden diese Aufgaben durch die Merkmale des Patentanspruchs 1. Weiterbildungen der Erfindung sind Gegenstand der abhängigen Ansprüche.

Erfindungsgemäß ist eine Druckluftversorgungseinrichtung für Fahrzeug-Druckluftanlagen mit einem Lufttrockner, einem Mehrkreisschutzventil, das Überströmventile mit jeweils wenigstens einem Ausgang, an dem ein Ausgangsdruck anliegt, aufweist, einer Elektronikvorrichtung und Drucksensoren dadurch weitergebildet, daß die Ausgangsdrücke der Überströmventile über einen Flansch den Drucksensoren zugeführt werden, die den Druck in elektrische Signale wandeln, wobei der Flansch den Lufttrockner mit dem Mehrkreisschutzventil verbindet.

Durch diese erfindungsgemäße Maßnahme können schon weitere Verbindungsrohrleitungen eingespart werden. Zudem können die elektrischen Signale einem Anzeigegerät im Führerhaus zugeführt werden, damit der Fahrzeugführer eine Kontrolle über die Drücke hat. Die Elektronikvorrichtung kann hierbei insbesondere ein elektromechanisches Anzeigegerät sein.

Wenn vorzugsweise die Drucksensoren in unmittelbarer Nähe oder in der Elektronikvorrichtung angeordnet sind, kann weiteres Material eingespart werden, wie insbesondere separate Stecker und aufwendige Schutzschaltungen, die insbesondere hinter den Drucksensoren angeordnet sind.

Wenn vorzugsweise die Elektronikvorrichtung am oder im Lufttrockner angeordnet ist, ist eine bevorzugte Lage der Elektronikvorrichtung möglich. Insbesondere bevorzugt ist es, wenn die Elektronikvorrichtung in einem gemeinsamen Gehäuse mit einer Verarbeitungselektronik zum gesteuerten Regenerieren einer Lufttrocknerpatrone angeordnet ist.

Wenn vorzugsweise wenigstens ein Druckbegrenzer zum Begrenzen von wenigstens einem der den Überströmventilen zugeführten Versorgungsdrücken vorgesehen ist, wird der Betrieb der Druckluftversorgungseinrichtung sicherer gestaltet.

Vorzugsweise umfaßt die Elektronikvorrichtung eine Steuerund/oder Regelelektronik. Diese kann dann insbesondere sowohl das gesteuerte Regenerieren der Lufttrocknerpatrone als auch weitere Funktionen erfüllen.

Vorzugsweise sind die elektrischen Signale der Drucksensoren mittels der Steuer- und/oder Regelelektronik in elektronischen Signale wandelbar. Durch diese Maßnahme können die erfaßten Drücke durch ein elektronisches System weiterverarbeitet werden. Hierbei ist insbesondere an ein digitales Verarbeitungsgerät, wie beispielsweise ein Computer, gedacht.

Wenn vorzugsweise die elektronischen Signale einer seriellen Schnittstelle zuführbar sind, sind die jeweils anfallenden elektronischen Signale mit lediglich einem Datenkabel an die gewünschten Orte führbar. Vorzugsweise sind die elektrischen und/oder elektronischen Signale zur Anzeige der Drücke zu dem Fahrerhaus des Fahrzeugs leitbar. Hierbei werden vorzugsweise möglichst wenig Kabel verwandt.

Vorzugsweise ist ferner ein Druckregler vorgesehen. Weiter vorzugsweise ist dem Druckregler einer der Ausgangsdrücke der Überstromventile als Referenzdruck zuführbar. Weiter vorzugsweise ist nach vorgebbaren Kriterien der dem Druckregler zuzuführende Referenzdruck mittels der Steuer- und/oder Regelelektronik auswählbar. Wenn ferner vorzugsweise die Steuerund/oder Regelelektronik den Druckregler steuert, ist eine kompakte Bauweise möglich.

Die Bauweise wird ferner noch kompakter, wenn vorzugsweise die Steuer- und/oder Regelelektronik die Druckluftregeneration regelt.

Vorzugsweise bilden der Lufttrockner und das Mehrkreisschutzventil eine Baueinheit. Ferner vorzugsweise ist das Mehrkreisschutzventil ein Vierkreisschutzventil.

Vorzugsweise ist eine Druckluftversorgungseinrichtung für Fahrzeug-Druckluftanlagen, der vorbeschriebenen Art, mit einem Lufttrockner, einem Mehrkreisschutzventil das Überstromventile mit jeweils wenigstens einem Ausgang, an dem ein Ausgangsdruck anliegt, aufweist, und einer Elektronikvorrichtung und Drucksensoren zum Messen der Ausgangsdrücke der Überströmventile des Mehrkreisschutzventils, die den Druck in elektrische Signale wandeln, dadurch weitergebildet, daß das Mehrkreisschutzventil unabhängig von den Drucksensoren und der Elektronikvorrichtung ausbaubar ist, während die Drucksensoren und/oder die Elektronikvorrichtung im eingebauten Zustand verbleiben.

Durch diese erfindungsgemäßen und bevorzugten Ausgestaltungen der Erfindung ist es möglich, die Montage der Druckluftversorgungseinrichtung insbesondere schnell und zuverlässig zu gestalten, wobei insbesondere verhältnismäßig schneller verschleißende Teile einfach austauschbar sind.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine Druckluftversorgungseinrichtung für Fahrzeug-Druckluftanlagen in schematischer Darstellung und
- Fig. 2: eine weitere schematische Darstellung einer erfindungsgemäßen Druckluftversorgungseinrichtung für Fahrzeug-Druckluftanlagen.

In den folgenden Figuren sind jeweils gleiche oder entsprechende Teile mit denselben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden:

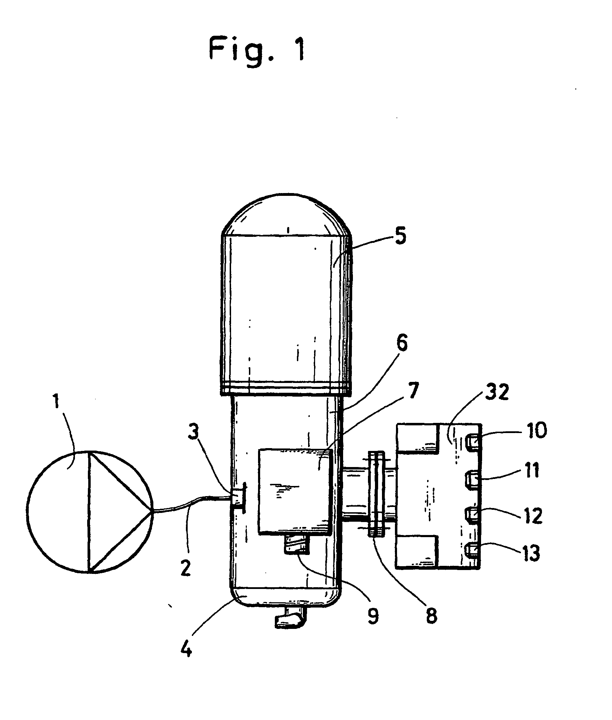

Fig. 1 zeigt eine Druckluftversorgungseinrichtung für Fahrzeug-Druckluftanlagen in schematischer Darstellung. Von einem Kompressor 1 wird über eine Verbindungsleitung 2 und einen Kompressoranschlußstutzen 3 Druckluft in einen Lufttrockner 6 geführt. Der Lufttrockner 6 ist mit einer Lufttrocknerpatrone 5 verbunden. Am Lufttrockner ist ferner ein Schalldämpfer mit Entlüftung 4 vorgesehen. Ferner ist am Lufttrockner 6 ein Elektronikgehäuse 7 vorgesehen, von dem ein gemeinsamer Stecker 9 abgeht. Über eine Flansch 8 ist an den Lufttrockner 6 ein Vierkreisschutzventil 32 angeschlossen. Das vierkreisschutzventil 32 bzw. dessen Gehäuse weist ferner Anschlußstutzen der Druckkreise 10 bis 13 auf.

In Fig. 1 ist der Lufttrockner 6 und das Vierkreisschutzventil 32 lediglich in schematischer Darstellung in Form von Gehäusen mit verschiedenen Anschlußmöglichkeiten dargestellt. Ein einziges Elektronikgehäuse 7 ist vorgesehen, das einen gemeinsamen Stecker 9 aufweist, der die Verbindung über ein Kabel, insbesondere ein einziges Kabel, beispielsweise zu dem Fahrerhaus darstellt. So kann beispielsweise der gemeinsame Stecker 9 eine serielle Steckverbindung sein mittels der über eine serielle Schnittstelle ein Steuergerät im Fahrerhaus elektronische Signale übermittelt werden können. Es kann allerdings auch sein, daß der gemeinsame Stecker 9 sowohl elektronische als elektrische Signale weiterleitet und zur Spannungsversorgung der Steuerund Regel-Elektronik dient, so daß über eine weitere Vorrichtung beispielsweise im Fahrerhaus die jeweiligen Signale zu deren Bestimmungsorten getrennt werden können. Ein elektrisches Signal bedeutet im Rahmen dieser Erfindung insbesondere ein analoges Signal. Ein elektronisches Signal bedeutet insbesondere ein digitales Signal. Eine Steuer- und Regelelektronik kann im Rahmen dieser Erfindung analoge und digitale Signale zusammen oder alleine eine Sorte dieser Signale verarbeiten.

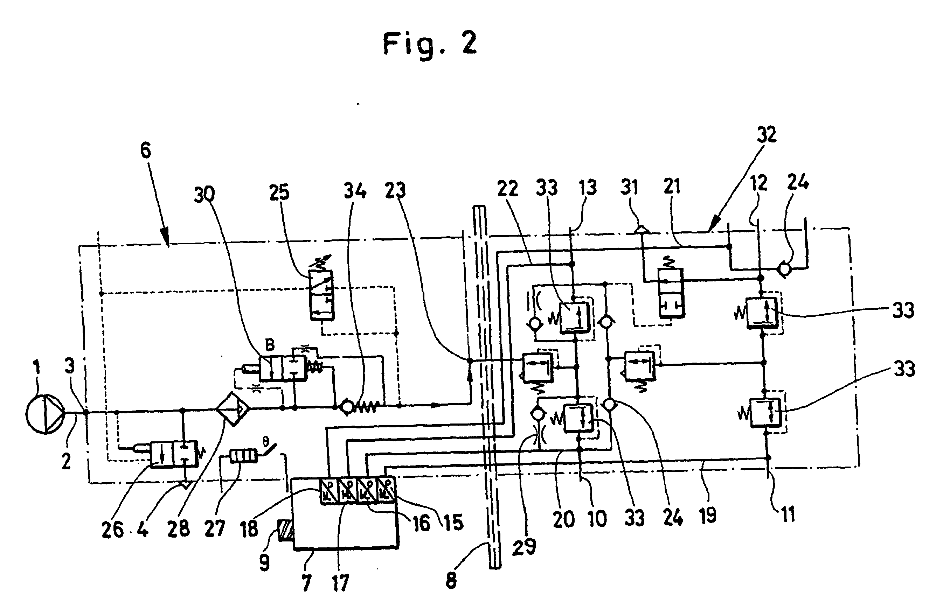

In Fig. 2 ist in schematischer Darstellung eine erfindungsgemäße Ausführungsform einer Druckluftversorgungseinrichtung für Fahrzeug-Druckluftanlagen gezeigt, die einen Lufttrockner 6 und ein Vierkreisschutzventil 32 umfaßt. In dem Gehäuse des Lufttrockners 6 sind untergebracht ein Druckregelventil 26 mit einem Schalldämpfer mit Entlüftung 4. Das Druckregelventil regelt den vom Kompressor 1 über die Verbindungsleitung 2 und den Kompressoranschlußstutzen 3 geleiteten Druck. Dieser geregelte Druck wird einer Trocknungspatrone 28 zugeführt und über ein federbelastetes Rückschlagventil 34 optional über ein Ansteuerventil 30 mittels der gemeinsamen Versorgungsleitung 23 des Vierkreisschutzventils zu diesem geleitet. Im Gehäuse des Lufttrockners 6 ist ferner ein Heizwiderstand 27 angeordnet und in diesem Ausführungsbeispiel ein Schaltventil 25.

An dem Gehäuse 7 des Lufttrockners 6 ist ein Elektronikgehäuse angebracht, das in diesem Fall lediglich die Drucksensoren 15 bis 18 aufnehmend dargestellt ist. In diesem Elektronikgehäuse ist bevorzugt auch eine Steuerungs- und/oder Regelungseinrichtung bzw. Steuer- und/oder Regelelektronik vorgesehen. An dem Elektronikgehäuse 7 ist der gemeinsame Stecker 9 angebracht. Das gezeigte Vierkreisschutzventil 32 weist Überströmventile 33, Drosseln 29, Rückschlagventile 24 und ein 2/2 Wegeventil auf. Das 2/2 Wegeventil ist an einen Auslaß 31 gekoppelt. Ferner sind in dieser Fig. 2 auch die Anschlußstutzen der Kreise 10 bis 13 dargestellt.

In diesem Ausführungsbeispiel werden die am Ausgangsstutzen 10 bis 13 der Überströmventile 35 anstehenden Enddrücke mittels Flanschrückführleitungen 19 bis 22 zurück vom Vierkreisschutzventil 32 über den Flansch 8 ins gemeinsame Elektronikgehäuse 7 zurückgeführt und dort ohne Verwendung eines zusätzlichen Sensorgehäuses, ohne eine separate Schutzbeschaltung und ohne separate Anschlußkabel entsprechend in elektrische Signale umgewandelt und insbesondere verarbeitet. Die verarbeiteten Signale werden über eine serielle Schnittstelle einem Steuergerät im Fahrerhaus übermittelt und von diesem dem Fahrer angezeigt.

Die bevorzugterweise auch in dem Elektronikgehäuse 7 angeordnete Steuer- und/oder Regelelektronik bereitet hierbei die elektrischen Signale der in dem Elektronikgehäuse 7 angeordneten Drucksensoren 15 bis 18 auf und stellt die zugehörigen Daten seriell an dem gemeinsamen Stecker 9 zur Verfügung.

Es ist bevorzugterweise vorgesehen, daß die Steuer- und/oder Regelelektronik auch die Steuerung vom Druckregler und ggf. zusätzlich die Regelung der Regeneration der Lufttrocknerpatrone ermöglicht. Durch die erfindungsgemäße Einrichtung ist es nicht mehr notwendig, die Druck-Spannungswandler, die im Rahmen dieser Erfindung einheitlich als Drucksensoren bezeichnet wurden, in einem eigenen aufwendig gebauten Gehäuse unterzubringen bzw. es ist möglich, ein einfaches von dem Mehrkreisschutzventil 32 getrenntes Gehäuse vorzusehen, um das Mehrkreisschutzventil schnell und einfach auszutauschen, ohne daß beim Austausch des Mehrkreisschutzventils 32 auch noch die Drucksensoren 15 bis 18 auszutauschen wären. Ferner können separate Stecker gespart werden und ferner sind keine separaten und aufwendigen Schutzbeschaltungen mehr notwendig.

### Bezugszeichenliste

- 1: Kompressor
- 2: Verbindungsleitung
- 3: Kompressoranschlußstutzen
- 4: Schalldämpfer mit Entlüftung
- 5: Lufttrocknerpatrone
- 6: Lufttrockner
- 7: Elektronikvorrichtung
- 8: Flansch
- 9: gemeinsamer Stecker
- 10-13: Anschlußstutzen der Kreise
- 15-18: Drucksensoren der Kreise
- 19-22: Flanschrückführleitungen
- 23: gemeinsame Versorgungsleitung der Vierkreisschutzeinheit
- 24: Rückschlagventil
- 25: Schaltventil
- 26: Druckregelventil
- 27: Heizwiderstand
- 28: Trocknungspatrone
- 29: Drossel
- 30: Ansteuerventil
- 31: Auslaß
- 32: Vierkreisschutzventil
- 33: Überstromventil
- 34: federbelastetes Rückschlagventil

## Patentansprüche

1. Druckluftversorgungseinrichtung für Fahrzeug-Druckluftanlagen mit einem Lufttrockner (6), einem Mehrkreisschutzventil (32), das Überströmventile (33) mit jeweils wenigstens einem Ausgang, an dem ein Ausgangsdruck anliegt, aufweist, einer Elektronikvorrichtung (7) und Drucksensoren (15-18), **dadurch gekennzeichnet, dass** die Ausgangsdrücke der Überströmventile (33) über einen Flansch (8) den Drucksensoren (15- 18) zugeführt werden, die den Druck in elektrische Signale wandeln, wobei der Flansch (8) den Lufttrockner (6) mit dem Mehrkreisschutzventil (32) verbindet.

2. Druckluftversorgungseinrichtung nach Anspruch 1, **dadurch gekennzeichnet, dass** die Drucksensoren (15-18) in unmittelbarer Nähe oder in der Elektronikvorrichtung (7) angeordnet sind.

3. Druckluftversorgungseinrichtung nach Anspruch 1 und/oder Anspruch 2, **dadurch gekennzeichnet, dass** die Elektronikvorrichtung (7) am oder im Lufttrockner (6) angeordnet ist.

4. Druckluftversorgungseinrichtung nach einem oder mehreren der Ansprüche 1 bis 3, **dadurch gekennzeichnet, dass** wenigstens ein Druckbegrenzer zum Begrenzen von wenigstens einem der den Überströmventilen (33) zugeführten Versorgungsdrücken vorgesehen ist.

5. Drucklufteinrichtung nach einem oder mehreren der Ansprüche 1 bis 4, **dadurch gekennzeichnet, dass** die Elektronikvorrichtung (7) eine Steuer- und/ oder Regelelektronik umfasst.

6. Druckluftversorgungseinrichtung nach Anspruch 5, **dadurch gekennzeichnet, dass** die elektrischen Signale der Drucksensoren (15-18) mittels der Steuer- und/oder Regelelektronik in elektronische Signales wandelbar sind.

7. Druckluftversorgungseinrichtung nach Anspruch 6, **dadurch gekennzeichnet, dass** die elektronischen Signale einer seriellen Schnittstelle zufügbar sind.

8. Druckluftversorgungseinrichtung nach einem oder mehreren der Ansprüche 1 bis 7, **dadurch gekennzeichnet, dass** die elektrischen und/oder elektronischen Signale zur Anzeige der Drücke zu dem Fahrerhaus des Fahrzeugs leitbar sind.

9. Druckluftversorgungseinrichtung nach einem oder mehreren der Ansprüche 1 bis 8, **dadurch gekennzeichnet, dass** ein Druckregler (26) vorgesehen ist.

10. Druckluftversorgungseinrichtung nach Anspruch 9, **dadurch gekennzeichnet, dass** dem Druckregler (26) einer der Ausgangsdrücke der Überstromventile (33) als Referenzdruck zuführbar ist.

11. Druckluftversorgungseinrichtung nach Anspruch 10, **dadurch gekennzeichnet, dass** nach vorgebbaren Kriterien der dem Druckregler (26) zuzuführende Referenzdruck mittels der Steuer- und/oder Regelelektronik auswählbar ist.

12. Druckluftversorgungseinrichtung nach einem oder mehreren der Ansprüche 5 bis 11, **dadurch gekennzeichnet, dass** die Steuer- und/oder Regelelektronik den Druckregler (26) steuert.

13. Druckluftversorgungseinrichtung nach einem oder mehreren der Ansprüche 5 bis 12, **dadurch gekennzeichnet, dass** die Steuer- und/oder Regelelektronik die Druckluftregeneration regelt.

14. Druckluftversorgungseinrichtung nach einem oder mehreren der Ansprüche 1 bis 13, **dadurch gekennzeichnet, dass** das Mehrkreisschutzventil (32) ein Vierkreisschutzventil ist.

15. Druckluftversorgungseinrichtung für Fahrzeug-Druckluftanlagen nach einem oder mehreren der Ansprüche 1 bis 14 mit einem Lufttrockner (6), einem Mehrkreisschutzventil (32), das Überströmventile (33) mit jeweils wenigstens einem Ausgang, an dem ein Ausgangsdruck anliegt, aufweist, und einer Elektronikvorrichtung (7) und Drucksensoren (15-18), die den Druck in elektrische Signale wandeln, **dadurch gekennzeichnet, dass** das Mehrkreisschutiventil (32) unabhängig von den Drucksensoren (15-18) und der Elektronikvorrichtung (7) ausbaubar ist, während die Drucksensoren (15-18) und die Elektronikvorrichtung (7) im eingebauten Zustand verbleiben.

16. Druckluftversorgungseinrichtung für Fahrzeug-Druckluftanlagen nach einem oder mehreren der Ansprüche 1 bis 14 mit einem Lufttrockner (6), einem Mehrkreisschutzventil (32), das Überströmventile (33) mit jeweils wenigstens einem Ausgang, an dem ein Ausgangsdruck anliegt, aufweist, und einer Elektronikvorrichtung (7) und Drucksensoren (15-18), die den Druck in elektrische Signale wandeln, **dadurch gekennzeichnet, dass** das Mehrkreisschutzventil (32) unabhängig von den Drucksensoren (15-18) ausbaubar ist, während die Drucksensoren (15-18) im eingebauten Zustand verbleiben.

17. Druckluftversorgungseinrichtung für Fahrzeug-Druckluftanlagen nach einem oder mehreren der Ansprüche 1 bis 14 mit einem Lufttrockner (6), einem Mehrkreisschutzventil (32), das Überströmventile (33) mit jeweils wenigstens einem Ausgang, an dem ein Ausgangsdruck anliegt, aufweist, und einer Elektronikvorrichtung (7) und Drucksensoren (15-18), die den Druck in elektrische Signale wandeln, **dadurch gekennzeichnet, dass** das Mehrkreisschutzventil (32) unabhängig von der Elektronikvorrichtung (7) ausbaubar ist, während die Elektronikvorrichtung (7) im eingebauten Zustand verbleibt.

18. Druckluftversorgungseinrichtung nach einem oder mehreren der Ansprüche 15 bis 17, **dadurch gekennzeichnet, dass** ein von dem Mehrkreisschutzventil (32) getrenntes Gehäuse vorgesehen ist, das die Elektronikvorrichtung (7) und/oder die Drucksensoren (15-18) umfasst.

## Claims

1. Compressed-air supply device for vehicle compressed-air systems, comprising an air drier (6), a multi-circuit guard valve (32) including overflow valves (33) provided with at least one discharge port subjected to a discharge pressure, an electronic device (7) and pressure sensors (15 - 18), **characterised in that** the discharge pressures of said overflow valves (33) are supplied via a flange (8) to said pressure sensors (15 - 18) which convert the pressure into electrical signals, with said flange (8) connecting said air drier (6) to said multi-circuit guard valve (32).

2. Compressed-air supply device according to Claim 1, **characterised in that** said pressure sensors (15 - 18) are disposed in the immediate vicinity of or in said electronic device (7).

3. Compressed-air supply device according to Claim 1 and/or Claim 2, **characterised in that** said electronic device (7) is disposed on or in said air drier (6).

4. Compressed-air supply device according to one or several of the Claims 1 to 3, **characterised in that** at least one pressure-limiting means is provided for limiting at least one of the supply pressures supplied to said overflow valves (33).

5. Compressed-air supply device according to one or several of the Claims 1 to 4, **characterised in that** said electronic device (7) includes an electronic control and/or feedback control system.

6. Compressed-air supply device according to Claim 5, **characterised in that** the electrical signals of said pressure sensors (15 - 18) are adapted to be converted into electronic signals by means of said electronic control and/or feedback control system.

7. Compressed-air supply device according to Claim 6, **characterised in that** said electronic signals are adapted to be added to a serial interface.

8. Compressed-air supply device according to one or several of the Claims 1 to 7, **characterised in that** said electrical and/or electronic signals are adapted to be passed to the truck cabin of the vehicle for display of the pressures.

9. Compressed-air supply device according to one or several of the Claims 1 to 8, **characterised in that** a pressure regulator (26) is provided.

10. Compressed-air supply device according to Claim 9, **characterised in that** one of said discharge pressures of said overflow valves (33) is supplied as reference pressure to said pressure regulator (26).

11. Compressed-air supply device according to Claim 10, **characterised in that** the reference pressure to be supplied to said pressure regulator (26) can be selected by predeterminable criteria by means of said electronic control and/or feedback control system.

12. Compressed-air supply device according to one or several of the Claims 5 to 11, **characterised in that** said electronic control and/or feedback control system controls said pressure regulator (26).

13. Compressed-air supply device according to one or several of the Claims 5 to 12, **characterised in that** said electronic control and/or feedback control system controls the regeneration of compressed air.

14. Compressed-air supply device according to one or several of the Claims 1 to 13, **characterised in that** said multi-circuit guard valve (32) is a four-circuit guard valve.

15. Compressed-air supply device for vehicle compressed-air systems according to one or several of the Claims 1 to 14, comprising an air drier (6), a multi-circuit guard valve (32) including overflow valves (33) provided with at least one discharge port subjected to a discharge pressure, and an electronic device (7) and pressure sensors (15 - 18) which convert the pressure into electrical signals, **characterised in that** said multi-circuit guard valve (32) is detachable independently of said pressure sensors (15 - 18) and said electronic device (7) while said pressure sensors (15 - 18) and said electronic device (7) remain in the fitted condition.

16. Compressed-air supply device for vehicle compressed-air systems according to one or several of the Claims 1 to 14, comprising an air drier (6), a multi-circuit guard valve (32) including overflow valves (33) provided with at least one discharge port subjected to a discharge pressure, and an electronic device (7) and pressure sensors (15 - 18) which convert the pressure into electrical signals, **characterised in that** said multi-circuit guard valve is detachable independently of said pressure sensors (15 - 18) while said pressure sensors (15 - 18) remain in the fitted condition.

17. Compressed-air supply device for vehicle compressed-air systems according to one or several of the Claims 1 to 14, comprising an air drier (6), a multi-circuit guard valve (32) including overflow valves (33) provided with at least one discharge port subjected to a discharge pressure, and an electronic device (7) and pressure sensors (15 - 18) which convert the pressure into electrical signals, **characterised in that** said multi-circuit guard valve (32) is detachable independently of said electronic device (7) while said electronic device (7) remains in the fitted condition.

18. Compressed-air supply device according to one or several of the Claims 1 to 17, **characterised in that** a housing separate from said multi-circuit guard valve (32) is provided which includes said electronic device (7) and/or said pressure sensors (15 - 18).

## Revendications

1. Dispositif d'alimentation en air comprimé pour des systèmes à air comprimé de véhicules, comprenant un séchoir d'air (6), une soupape de protection à plusieurs circuits (32) renfermant des soupapes de retour (33) pourvues d'au moins une ouverture de décharge assujettie à une pression de décharge, un dispositif électronique (7) et des capteurs de pression (15 - 18), **caractérisé en ce que** les pressions de décharge desdites soupapes de retour (33) sont alimentées via un connecteur (8) auxdits capteurs de pression (15 - 18) qui convertissent la pression en signaux électriques, audit connecteur (8) reliant ledit séchoir d'air (6) à ladite soupape de protection à plusieurs circuits (32).

2. Dispositif d'alimentation en air comprimé selon la revendication 1, **caractérisé en ce que** lesdits capteurs de pression (15 - 18) sont disposés à proximité immédiate du ou dans ledit dispositif électronique (7).

3. Dispositif d'alimentation en air comprimé selon la revendication 1 et/ou la revendication 2, **caractérisé en ce que** ledit dispositif électronique (7) est disposé au ou dans ledit séchoir d'air (6).

4. Dispositif d'alimentation en air comprimé selon une ou plusieurs des revendications 1 à 3, **caractérisé en ce qu'**au moins un moyen limiteur de pression est disposé à limiter au moins une des pressions d'alimentation alimentées auxdites soupapes de retour (33).

5. Dispositif d'alimentation en air comprimé selon une ou plusieurs des revendications 1 à 4, **caractérisé en ce que** ledit dispositif électronique (7) renferme un système électronique de commande et/ou de réglage.

6. Dispositif d'alimentation en air comprimé selon la revendication 5, **caractérisé en ce que** les signaux électriques desdits capteurs de pression (15 - 18) sont aptes à être converti en signaux électroniques moyennant ledit système électronique de commande et/ou de réglage.

7. Dispositif d'alimentation en air comprimé selon la revendication 6, **caractérisé en ce que** lesdits signaux électroniques sont aptes à être appliqué à une interface sérielle.

8. Dispositif d'alimentation en air comprimé selon une ou plusieurs des revendications 1 à 7, **caractérisé en ce que** lesdits signaux électriques et/ou électroniques sont aptes à être passé à la cabine du conducteur du véhicule pour l'affichage des pressions.

9. Dispositif d'alimentation en air comprimé selon une ou plusieurs des revendications 1 à 8, **caractérisé en ce qu'**un régulateur de pression (26) est installé.

10. Dispositif d'alimentation en air comprimé selon la revendication 9, **caractérisé en ce qu'**une desdites pressions de décharge desdites soupapes de retour (33) est alimentée en tant que pression de référence audit régulateur de pression (26).

11. Dispositif d'alimentation en air comprimé selon la revendication 10, **caractérisé en ce que** la pression de référence à alimenter audit régulateur de pression (26) peut être choisie par des critères prédéterminables moyennant ledit système électronique de commande et/ou de réglage.

12. Dispositif d'alimentation en air comprimé selon une ou plusieurs des revendications 5 à 11, **caractérisé en ce que** ledit système électronique de commande et/ou de réglage commande ledit régulateur de pression (26).

13. Dispositif d'alimentation en air comprimé selon une ou plusieurs des revendications 5 à 12, **caractérisé en ce que** ledit système électronique de commande et/ou de réglage commande la régénération de l'air comprimé.

14. Dispositif d'alimentation en air comprimé selon une ou plusieurs des revendications 1 à 13, **caractérisé en ce que** ladite soupape de protection à plusieurs circuits (32) est une soupape de protection à quatre circuits.

15. Dispositif d'alimentation en air comprimé pour des systèmes à air comprimé de véhicules selon une ou plusieurs des revendications 1 à 14, comprenant un séchoir d'air (6), une soupape de protection à plusieurs circuits (32) renfermant des soupapes de retour (33) pourvues d'au moins une ouverture de décharge assujettie à une pression de décharge, et un dispositif électronique (7) et des capteurs de pression (15 - 18), qui convertissent la pression en signaux électriques, **caractérisé en ce que** ladite soupape de protection à plusieurs circuits (32) est démontable indépendamment desdits capteurs de pression (15 - 18) et dudit dispositif électronique (7), pendant que lesdits capteurs de pression (15 - 18) et ledit dispositif électronique (7) restent en état monté.

16. Dispositif d'alimentation en air comprimé pour des systèmes à air comprimé de véhicules selon une ou plusieurs des revendications 1 à 14, comprenant un séchoir d'air (6), une soupape de protection à plusieurs circuits (32) renfermant des soupapes de retour (33) pourvues d'au moins une ouverture de décharge assujettie à une pression de décharge, et un dispositif électronique (7) et des capteurs de pression (15 - 18), qui convertissent la pression en signaux électriques, **caractérisé en ce que** ladite soupape de protection à plusieurs circuits est démontable indépendamment desdits capteurs de pression (15 - 18), pendant que lesdits capteurs de pression (15 - 18) restent en état monté.

17. Dispositif d'alimentation en air comprimé pour des systèmes à air comprimé de véhicules selon une ou plusieurs des revendications 1 à 14, comprenant un séchoir d'air (6), une soupape de protection à plusieurs circuits (32) renfermant des soupapes de retour (33) pourvues d'au moins une ouverture de décharge assujettie à une pression de décharge, et un dispositif électronique (7) et des capteurs de pression (15 - 18), qui convertissent la pression en signaux électriques, **caractérisé en ce que** ladite soupape de protection à plusieurs circuits (32) est démontable indépendamment dudit dispositif électronique (7), pendant que ledit dispositif électronique (7) reste en état monté.

18. Dispositif d'alimentation en air comprimé selon une ou plusieurs des revendications 1 à 17, **caractérisé en ce qu'**un carter séparé de ladite soupape de protection à plusieurs circuits (32) est disposé, qui renferme ledit dispositif électronique (7) et/ou lesdits capteurs de pression (15 - 18).
